# EUROPÄISCHE PATENTANMELDUNG

(11) **EP 2 386 209 A2**
(43) Veröffentlichungstag der Anmeldung: **16.11.2011**
(21) Anmeldenummer: 11003001.2
(22) Anmeldetag: 08.04.2011
(51) Int. Cl.: A23L 1/00, A23L 1/236

(54) **Natürliches Süssungsmittel**

(30) Priorität: 11.05.2010 DE 102010020246
(71) Anmelder: Jungbunzlauer Austria AG, 68526 Ladenburg (DE)
(72) Erfinder: Scholten, Claudia, 68163 Mannheim (DE); Jantschewski, Vitalij, 68542 Heddesheim (DE); Seemann, Matthias, 68542 Heddesheim (DE)
(74) Vertreter: Wagner, Jutta

(57) **Zusammenfassung**

Die vorliegende Erfindung betrifft ein Verfahren zur Herstellung eines Süßungsmittels enthaltend Erythritol und Steviaextrakt, wobei Erythritolpartikel mit einer Größe im Bereich von 250 bis 1400 µm im Luftstrom verwirbelt und mit einer wässrigen Lösung von Steviaextrakt im Gewichtsverhältnis Erythritol:Steviaextrakt von 100:0,025 bis 100:0,16 besprüht werden, das so hergestellte Süßungsmittel und seine Verwendung als Zuckerersatz.

## Beschreibung

Die vorliegende Erfindung betrifft ein Süßungsmittel, seine Herstellung und seine Verwendung als Zuckerersatz.

Zucker (Saccharose) und Honig sind die am meisten verbreiteten, als natürlich angesehenen Süßungsmittel. Da beide einen vergleichsweise hohen Energiegehalt aufweisen, wurde bereits früh nach kalorienreduzierten Ersatzstoffen gesucht. Heute ist eine Vielzahl an alternativen Süßungsmitteln bzw. Süßstoffen bekannt. Es handelt sich um synthetisch hergestellte oder natürliche Ersatzstoffe für Zucker, die zumeist eine wesentlich stärkere Süßkraft haben (je nach Süßstoff-Art 10- bis 13.000-fach süßer). Sie haben sehr wenige oder keine Kalorien. Außerdem bieten sie Karies verursachenden Bakterien keine Nahrung, da sie von der Mundflora nicht metabolisiert werden. Die Süßkraft der Süßstoffe wird immer auf Saccharose bezogen, die demnach die Süßkraft 1 hat.

Häufig werden Süßstoffe untereinander kombiniert, um einen Süßgeschmack wie bei Saccharose zu erzielen. Dies ist nötig, da der Geschmackseindruck bei Süßstoffen vom dem bei Zucker abweicht. Einige Süßstoffe süßen erst etwas verzögert, andere sehr schnell. Bei einigen verbleibt die Süße sehr lange im Mund, bei manchen tritt bei höheren Konzentration ein Beigeschmack (z. B. lakritz- oder mentholartig) auf.

Tabelle 1 gibt eine Übersicht der in der Europäischen Union zugelassenen Süßstoffe.

**Tabelle 1**

| **Substanz** | **Zusatzstoffnr.** | **Süßkraft** |
|---|---|---|
| Acesulfam | E950 | 130-200 |
| Aspartam | E951 | 200 |
| Aspartam-Acesulfam-Salz | E962 | 350 |
| Cyclamat | E952 | 30-50 |
| Saccharin | E954 | 300-500 |
| Sucralose | E955 | 600 |
| Thaumatin | E957 | 2.000-3.000 |
| Neohesperidin | E959 | 400-600 |
| Neotam | E961 | 10.000―13.000 |

Als Beispiel für weitere Süßstoffe, die derzeit in der Europäischen Union (noch) nicht zugelassen sind, wären zu nennen: Alitam (2.000-3.000), Brazzein (500-2.000), Hernandulcin (ca. 1.250), Lugdunam (220.000-300.000), Monellin (800-2.000), Pentadin (500) und Steviaextrakt (250-300). Die Süßkraft ist jeweils in Klammern angegegeben.

Über gesundheitliche Risiken von synthetisch hergestellten Süßungsmitteln wird seit Jahrzehnten diskutiert und obwohl für die zugelassenen Süßstoffe keine fundierten Anhaltspunkte für nachteilige Wirkungen vorliegen, werden sie von vielen Vebrauchern nicht voll akzeptiert. Daher besteht Bedarf an als natürlich angesehenen Süßungsmitteln, d.h. solchen, die wie Zucker in natürlichen Rohstoffen vorhanden sind. Hier kommen insbesondere in Pflanzen vorkommende Süßstoffe wie Brazzein, Luo Han Guo, Miraculin, Monellin und Steviaextrakte in Betracht. Auch der Geschmack von Süßungsmitteln ist noch nicht immer optimal, trotz der zahlreichen Vorschläge, von denen einige im folgenden aufgelistet sind.

US 2007/0082106 schlägt Mischungen aus einem Zuckeralkohol, D-Tagatose und einem oder mehreren, weiteren Süßstoffen zur Herstellung von im Geschmack verbesserten dietätischen oder kalorienreduzierten Getränken und Nahrungsmitteln vor. Am Beispiel einer Cola wird gefunden, dass ein Gemisch von Aspartam und Acesulfam als Süßungsmittel nur bei Anwesenheit von Erythritol und D-Tagatose in Geschmack und Gefühl mit zuckerhaltiger Cola vergleichbar ist. In weiteren Beispielen wird Rebaudiosid A, ein Steviaextrakt, und Mogrosid, ein Luo Han Guo Extrakt, in sehr geringen Mengen einem Gemisch von Erythritol und D-Tagatose zugefügt.

JP A 11075762 beschreibt eine Kombination von Zuckeralkohol, vorzugsweise Erythritol oder Xylitol, mit einer dietätischen Faser, z.B. einer aus Stärke oder Mais gewonnenen Faser, der auch ein stark süßender Süßstoff zugesetzt werden kann, wobei Steviaextrakt und Aspartam als bevorzugt bezeichnet werden.

Die Kombination von Acesulfam mit Steviaextrakt wird in JP A 2001258502, JP A 2003231647 und JP A 20011204420 vorgeschlagen.

Die JP A 60048920 beschreibt ein Süßungsmittel aus Aspartam, Lecithin und entweder Saccharin oder Steviaextrakt.

In CN A 101124980 wird als Süßungsmittel eine Kombination aus 60 - 85 Gew.-% Dextrin, 0,5 - 1,5 Gew.-% Neotam, 5 - 15 Gew.-% Steviazucker, 5 - 15 Gew.-% Honigsüße und 1 - 10 Gew.-% Aspartam vorgeschlagen.

Es sind verschiedene Süßungsmittel auf Basis von Stevia als natürlichem Süßstoff kommerziell erhältlich. Unter der Marke Truvia ® wird eine Mischung aus Erythritol, Rebiana und natürlichen Aromen als Süßungsmittel angeboten. Rebiana, auch Rebaudiosid A, wird durch Extraktion von Steviablättern mit heißem Wasser gewonnen. Eine Mischung aus Erythritol, Isomaltulose, Rebiana, Zellulosepulver und natürlichen Aromen wird als PureVia ® angeboten. Sun Crystals ® ist ein Gemisch aus Rohrzucker und Steviaextrakt. Unter Stevia in the raw ® wird reines Rebiana angeboten und unter Sweet Leaf ® ein reiner, wässrig extrahierter und getrockneter Steviaextrakt. Die Stevia Germany GmbH & Co KG bietet unter dem Namen SteSweet ® verschiedene Stevia-Produkte an, z.B. sehr reines Rebiana als solches oder im Gemisch mit Erythritol oder Inulin.

US 2010/0055255 betrifft Süßungsmittel, die ein Disaccharid, Eryhtritol, Rebaudiosid A und Zellulose enthalten. Es wird auch ein Verfahren zur Herstellung der Süßungsmittel vorgeschlagen, bei dem die Inhaltsstoffe in einem Wirbelstrombeschichter mit Disaccharidlösung beschichtet werden.

WO 2009/006200 schlägt Mischungen aus Erythritol und Steviaextrakt, vornehmlich Rebaudiosid A, vor, bei denen Stevia 20 bis 75 % der Süßkraft bereitstellt, was Gewichtsverhältnissen Erythritol:Stevia von 2000:1 bis 200:1 entsprechen soll. In den Beispielen wird gezeigt, dass bei Einsatz von weniger Stevia der Erythritolanteil ein Kältegefühl verursacht.

Überraschend wurde nun gefunden, dass Mischungen von Erythritol mit Steviaextrakt im Süßkraftverhältnis von etwa 80:20 ein natürliches Süßungsmittel mit gesteigerter Süßkraft und sehr zuckerähnlichem Geschmacksprofil ergeben. Das in WO 2009/006200 beobachtete Kältegefühl tritt nicht auf.

Es wurde weiter überraschend gefunden, dass bei Beschichtung von Erythritolpartikeln mit Steviaextrakt ein Süßungsmittel erhalten wird, das eine zuckerähnliche Süße sowohl im ersten Moment als auch nach 20 Sekunden aufweist und außerdem vom Mundgefühl und im Hinblick auf Nachsüße, Bitterkeit und Kühleffekt nahezu mit Zucker übereinstimmt. Erstaunlicherweise konnte dies bei einer einfachen Vermischung von Erythritol und Steviaextrakt nur mit eingeschränkten Mengenverhältnissen erreicht werden.

Die vorliegende Erfindung löst daher die oben genannten Aufgaben durch ein Verfahren zur Herstellung eines Süßungsmittels aus Erythritol und Steviaextrakt, bei dem Erythritolpartikel mit einer Stevialösung beschichtet werden und die damit erhältlichen mit 0,025 bis 0,16 Gew.-% Steviaextrakt beschichteten Erythritolpartikel mit einer Größe im Bereich von 250 bis 1400 µm. Die Erfindung betrifft auch ein Süßungsmittel enthaltend Erythritol und Steviaextrakt im Gewichtsverhältnis von 100 : 0,039 bis 100 : 0,027.

Beide Süßstoffe sind an sich bekannt und es wurden durchaus auch schon Süßungsmittel vorgeschlagen, welche beide enthalten. Jedoch wurden in diesen Mischungen überwiegend noch weitere Zusätze, z.B. andere Süßstoffe oder Aromen, für nötig gehalten und bisher nur eine geringere oder eine höhere Menge Steviaextrakt verwendet. Die US 2007/0082106 schlägt in Beispiel 25 ein Verhältnis Erythritol zu Steviaextrakt von 100 : 1,4 und in Beispiel 26 von 100 : 2,8 vor. In JP 11075762 werden laut Tabelle 5 in Beispiel 2 20 % und in Beispiel 3 30 % Erythritol und 0,07 % Steviaextrakt verwendet, was Gewichtsverhältnissen von 100 : 0,35 bzw. 100 : 0,23 entspricht. Bei diesen Mengenverhältnissen ergibt sich bei Verwendung der einfachen dualen Mischung ein zu starkes Off-flavour durch den Steviaextrakt, die zusätzlichen Mischungsbestandteile sind daher bei solchen Mischungsverhältnissen notwendig. In WO 2009/006200 werden Gewichtsverhältnisse Erythritol zu Stevia von 100:0,05 bis 100:0,5 eingesetzt, darunter soll ein kühlender Effekt des Erythritol auftreten.

Erfindungsgemäß ergibt sich jedoch für Mischungsverhältnisse von Erythritol:Steviaextrakt im Bereich von 100:0,039 bis 100:0,027, eine angenehme Süße, wobei weder der von Steviaextrakten bzw. Erythritol allein bekannte bittere Nebengeschmack noch eine störende Nachsüße auftreten. Die Süßkraft wird dabei durch die Kombination gesteigert, d.h. die beiden Süßstoffe wirken in dem beanspruchten Bereich synergistisch. Das erfindungsgemäße Süßungsmittel ist auch sensorisch gleichwertig zu Zucker, zeigt insbesondere keinen Kühleffekt, wie er vor allen Dingen bei Süßungsmitteln, die ein Polyol enthalten, mitunter vorkommt.

Bei den erfindungsgemäß hergestellten, mit Stevia beschichteten Erythritol Partikeln lässt sich in einem deutlich weiteren Bereich der Gewichtsverhältnisse ein zuckerähnliches Süßungsmittel erhalten. Hier sind Süßkraftverhältnisse von 50:50 bis 85:15 brauchbar. Wie bei den obigen Mischungen haben die so hergestellten Süßungsmittel eine angenehme Süße, wobei weder der von Steviaextrakten bzw. Eryhtritol allein bekannte bittere Nebengeschmack noch eine störende Nachsüße auftreten. Die Beschichtung bietet außerdem den Vorteil, dass das Süßungsmittel schneller löslich ist.

Als Steviaextrakt eignet sich besonders Rebaudiosid A und Steviosid und Gemische aus diesen beiden. Besonders geeignet ist Rebaudiosid A und Gemische aus Rebaudiosid A und Steviosid mit mindestens 97 Gew.-%, bevorzugt mindestens 99 Gew.-% Rebaudiosid A und maximal 3 % Steviosid.

Die Gewinnung des Steviaextrakt erfolgt in an sich bekannter Weise. Es gibt unterschiedliche Raffinationsprozesse, die im Allgemeinen, siehe beispielsweise Maiti, R. K.; Purohit, S. S.: "Stevia: A miracle plant for human health"; Jodhpur: Agrobios, 2008, S. 41 und Wilke, H.-P.; Windhaber, S.; Triel, K.: "Entwicklung der Parameter für das Genehmigungsverfahren: Natürlicher Süßstoff aus einer Pflanze für Nahrungsmittel, Getränke und Medikamente"; Stevia Rebaudiana Bertoni Forschungsprojekt, FH Kaiserslautern, 2001, S. 10, nach folgendem Schema ablaufen:
1. Herauslösen des Süßungsmittels durch kochendes Wasser (Wasserinfusion: 1:10 Gew./Vol) und/oder andere Lösungsmittel (z.B. n-Butyl-Alkohol)
2. Separation per lonenaustauscher
3. Filtration durch Ausfällung oder Koagulation
4. Trocknung, typischerweise: Herauslösen des organischen Extrakts, Trocknung mit Natriumsulfat, Bleichen mit Aktivkohle, Verdampfung unter Vakuum bis zur vollständigen Trocknung
5. Kristallisation, typisch:Auflösen der Restmasse in heißem Alkohol und Lagerung bis zur Kristallisierung des Steviosid, wobei mehrere Rekristallisationen zu reinerem Steviosid führen.

Die meisten Extraktions- und Reinigungsprozesse werden mit Methanol durchgeführt. Die neueren Verfahren extrahieren mit Wasser, um ein noch "natürlicheres" Produkt herzustellen. Allgemein kann eine 96 %ige Reinheit der Stevia-Kristalle erreicht werden. Durch die Extraktion mit kochendem Wasser kann eine 93 bis 98 %ige Herauslösung von Steviosid erreicht werden. Weitere Prozesse sind die Umkehrosmose und die Ultrafiltration, siehe Rosenplenter, K.; Nöhle, U.; Lipinski, R. G. W.: "Handbuch Süßungsmittel: Eigenschaften und Anwendungen", Behr's Verlag Hamburg, 2007, S. 535-536 und Maiti et al., Jodhpur: Agrobios 2008, S. 41.

Das häufig unangenehme Aroma der getrockneten Stevia-Blätter, verursacht durch bestimmte Blattkomponenten und nicht durch die Stevioside, kann mittels spezieller Herstelltechniken entfernt werden. Besonders wichtig ist nach Rosenplenter et al., 2007, S. 535, dass die Blättervenen mit ihren bitteren Bestandteilen bei der Extraktion (Auswaschung) und der Zerkleinerung nicht mit dem Blattmaterial vermischt werden.

Erythritol ist ein kommerziell erhältliches Produkt, das auch in einer zur Verwendung in Lebensmitteln zugelassenen Reinheit angeboten wird. Es kann in an sich bekannter Weise hergestellt werden. Erythritol ist ein natürliches Produkt, ein Zuckeralkohol, der aus Pflanzen isoliert werden kann. Aus wirtschaftlichen Gründen wird Erythritol jedoch in der Regel durch mikrobielle Umwandlung von niedermolekularen Kohlenhydraten, beispielsweise Glucose oder Saccharose, gewonnen. Auch diese Art der Herstellung ist als natürlicher Prozess anzusehen.

Das erfindungsgemäße Süßungsmittel zeichnet sich dadurch aus, dass es ausschließlich aus Erythtritol und Steviaextrakt bestehen kann und vorzugsweise auch besteht. Weder Aromen noch andere Zusätze sind notwendig, um das gewünschte Geschmacksprofil und einen einwandfreien sensorischen Eindruck zu erreichen.

Das Süßungsmittel kann in an sich bekannter Weise konfektioniert werden, sowohl als Pulver, Granulat, Formkörper und Tab, als auch in flüssiger Form. Formkörper sind vor allem Würfel, jedoch kann wie bei Zucker auch, eine andere Form gewählt werden. Tabs entsprechen der üblichen Form von Süßstoffen, die typischerweise in Spenderdosen oder in Beutelchen verpackt werden. Flüssige Varianten sind Konzentrate, die sich besonders für Getränke, Süßspeisen und ähnliches eignen, bei denen es auf eine schnelle und gleichmäßige Verteilung ankommt, also ein Auflösevorgang unerwünscht ist.

Die Herstellung von Pulver, Granulat, Formkörper, Tab und Lösungen erfolgt in an sich bekannter Weise. Übliche Zusätze, wie etwa Bindemittel, Streckmittel etc. können verwendet werden. Es ist möglich und bevorzugt, dass möglichst wenig, insbesondere keine weiteren Substanzen enthalten sind.

Sofern für das Süßungsmittel eine zusätzliche Geschmackskomponente oder eine funktionelle Eigenschaft erwünscht ist, z.B. für einen Vanillezuckerersatz oder einen Gelierzuckerersatz, kann - wie bei Zucker auch - ein entsprechender Zusatz erfolgen. Es ist aber zu betonen, dass dieser Zusatz nicht zur Maskierung irgendeines Nebengeschmacks oder zur Verbeserung der sensorischen Eigenschaften erfolgt, sondern um den gewünschten Geschmack bzw. die gewünschte Funktion zu erhalten. So würde erfindungsgemäß ein "Vanillezucker" Erythritol, Steviaextrakt und Vanille oder Vanillearoma enthalten. Ein "Gelierzucker" würde Erythritol, Steviaextrakt und Geliermittel sowie Konservierungsmittel (zum Ersatz der konservierenden Wirkung des Zuckers, wie von Gelierzuckern mit vermindertem Zuckergehalt bekannt) enthalten.

Ein Vorteil des erfindungsgemäßen Süßungsmittels ist, dass die Süßkraft ungefähr derjenigen von Zucker entspricht. Damit ist es möglich, das erfindungsgemäße Süßungsmittel im täglichen Gebrauch ohne große Umstellungen anstelle von Zucker zu verwenden.

Natürlich eignet sich das Süßungsmittel auch zum vollständigen oder teilweisen Ersatz von Zucker in Lebensmitteln wie beispielsweise Getränken, Backwaren, Süßwaren wie z.B. Schokolade, Eis, Desserts, Marmeladen/Konfitüren, Fruchtzubereitungen, Dressings/Marinaden, Saucen oder Frühstückscerealien. Die Herstellung dieser Lebensmittel erfolgt in an sich bekanter Weise.

Erfindungsgemäß werden Süßungsmittel aus Erythritol und Steviaextrakt hergestellt, indem Erythritolpartikel mit einer Größe im Bereich von 250 bis 1400 µm bereitgestellt und mit einer, insbesondere wässrigen Lösung von Steviaextrakt beschichtet werden. Besonders vorteilhaft ist es, die Erythritolpartikel im Luftaufstrom zu verwirbeln und mit der Lösung des Steviaextrakts zu besprühen. Erythritol und Steviaextrakt werden dabei in einem Süßkraftverhältnis von 49:51 bis 86:14, vorzugsweise 50:50 bis 85:15 eingesetzt. Bei einer Süßkraft von Erythritol von 0,5 und von Steviaextrakt von 325 ergeben sich daraus Mengenverhältnisse von 100:0,16 bis 100:0,025, vorzugsweise von 100:0,155 bis 100:0,027. Besonders bevorzugt sind mit Steviaextrakt beschichtete Erythritolpartikel, bei denen das Süßkraftverhältnis von Steviaextrakt zu Erythritol etwa 50 :50 oder etwa 82:18 beträgt. Sie zeigen eine höhere Süßkraft als die durch Mischen der trockenen Substanzen erzeugten Mischungen.

Die Partikelgrößen des erhaltenen Süßungsmittels liegen im Bereich von 250 bis 1400 µm. Die Partikelgröße ist wichtig, denn es wurde z.B. für kleinere Partikel gefunden, dass die Süße etwa doppelt so hoch, wie bei den erfindungsgemäßen Partikeln war. Die Partikel können z.B. durch Sieben in der gewünschten Größe erhalten werden. Es kommt erfindungsgemäß darauf an, dass im wesentlichen keine Partikel mit einer Größe unter 250 µm oder einer Größe über 1400 µm verwendet werden. Die Größe der Partikel kann innerhalb dieses Bereiches frei variieren, es ist nicht erforderlich, Partikel mit Größen im gesamten brauchbaren Bereich zu verwenden. So liegt es im Rahmen der Erfindung, Partikel mit einer Größe z.B. von 250 bis 300 µm oder von 600 bis 800 µm oder von 800 µm bis 1400 µm oder von 400 bis 600 µm einzusetzen. Ein bevorzugter Bereich beträgt von 250 bis 800 µm.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Ein sog. "near water" Getränk wurde gemäß folgender Rezeptur hergestellt:

| | |
|---|---|
| 1. Wasser | 92,360 |
| 2. Süßungsmittel | 7,000 |
| 3. Zitronensäure Monohydrat | 0,200 |
| 4. Apfelsaftkonzentrat, klar | 0,400 |
| 5. Burnt Sugar | 0,005 |
| 6. nat. Aroma | 0,028 |

Dem Getränk wurde Kohlensäure und das zu untersuchende Süßungsmittel zugesetzt. Aus den zugesetzten Mengen Erythritol und Sterviaextrakt wurde mit der zuvor ermittelten Süßkraft von 0,5 für Erythritol und von 325 für den Steviaextrakt die erwartete Süßkraft berechnet. Die tatsächliche Süßkraft wurde durch Verkostung durch ein Panel bestimmt. Die Ergebnisse fasst Tabelle 2 zusammen.

**Tabelle 2**

| Erythritol | Steviaextrakt | Süßkrafverhältnis | erwartete Süßkraft | ermittelte Süßkraft | Veränderung | Bemerkungen |
|---|---|---|---|---|---|---|
| 12 g/kg | 73,8 mg/kg | 20:80 | 0,5 | 0,47 | -6 % | |
| 24 g/kg | 55,4 mg/kg | 40:60 | 0,5 | 0,39 | -21 % | |
| 30 g/kg | 46,2 mg/kg | 50:50 | 0,5 | 0,56 | 13% | deutlicher Stevia-Nebengeschmack |
| 36 g/kg | 36,9 mg/kg | 60:40 | 0,5 | 0,61 | 21 % | |
| 48 g/kg | 18,5 mg/kg | 80:20 | 0,5 | 0,69 | 38% | angenehm süß |
| 51 g/kg | 13,8 mg/kg | 85:15 | 0,5 | 0,60 | 20% | |
| 54 g/kg | 9,2 mg/kg | 90:10 | 0,5 | 0,57 | 13% | deutlicher Erythritol-Nebengeschmack |
| 59,4 g/kg | 0,9 mg/kg | 99:01 | 0,5 | 0,67 | 33% | |

Es ist deutlich, dass nur im beanspruchten Bereich eine erhöhte Süßkraft bei gleichzeitig gutem Geschmack erzielt wird.

### Beispiel 2

Die Ergebnisse von Beispiel 1 wurden auch durch eine weitere Verkostung eines Süßungsmittel mit einem Erythritol:Stevia Süßkraftverhältnis von 82:18 bestätigt. In einem Getränk mit der folgenden Rezeptur

| | |
|---|---|
| 1. Süßstoffmischung | 50,0 g |
| 2. Konservierungsmittel | 0,3 g |
| 3. Natriumcitrat | 0,05 g |
| 4. Citronensäure | 2,6 g |
| 5. Aroma | 0,5 g |
| 6. Wasser | 946,43 g |

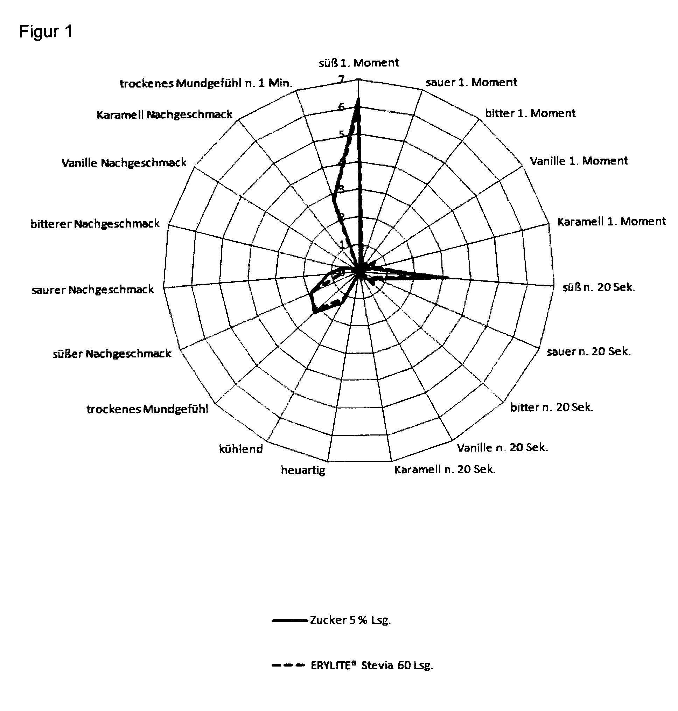

wurde durch ein professionelles Panel die Süßstoffmischung mit Zucker verglichen. Figur 1 zeigt die Verkostungsergebnisse in einer Spiderwebdarstellung. Die Ergbenisse für 5 % Zucker entsprechen der schwarzen Linie, die Lösung des erfindungsgemäßen Süßungsmittels der gestrichelten Linie. Die Übereinstimmung in allen sensorischen Eindrücken ist sehr gut.

### Beispiel 3

Es wurde eine Lösung von Steviaextrakt in Wasser hergestellt und in einer Wirbelschichtapparatur auf im Luftstrom verwirbeltes Erythritol mit einer Partikelgröße im Bereich von 250 bis 800 µm aufgesprüht. Die Zulufttemperatur betrug 75°C, der Luftvolumenstrom 800 m³/h, der Sprühdruck 2 bar und die Sprührate 300 g/min. Man erhielt eine gleichmäßige Verteilung des Stevia auf die Erythrtitolpartikel, das Süßkraftverhältnis betrug 50:50.

### Beispiel 4

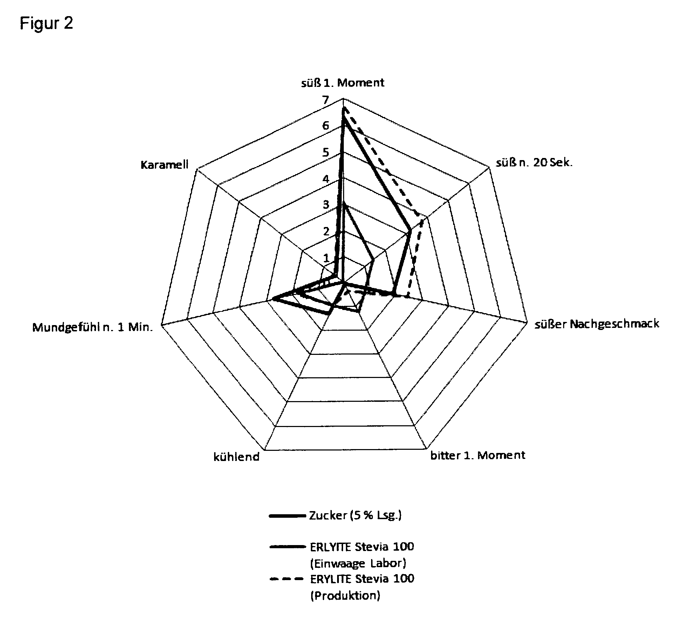

Die in Beispiel 3 hergestellten Partikel wurden in wässriger Lösung im Vergleich zu einer Zuckerlösung gleicher Süßkraft von einem Panel verkostet. Zusätzlich wurde eine Lösung eines durch einfaches Mischen erhaltenen Süßungsmittels mit denselben Mengenverhätlnissen Erythritol zu Stevia als Vergleich verkostet. In Figur 2 ist eine Spiderwebdarstellung der Bewertung durch das Panel dargestellt. Man erkennt deutlich, dass das mit dem erfindungsgemäßen Verfahren erhaltene Süßungsmittel (gestrichelte Linie) kaum Abweichungen von Zucker (schwarze Linie) zeigt, während das durch einfaches Mischen erhaltene Vergleichsprodukt (graue Linie) signifikant weniger süß und im ersten Moment bitter ist. Die erhöhte Süßkraft des erfindungsgemäß hergestellten Süßungsmittels bietet den Vorteil, dass seine Süßkraft in etwa derjenigen von Zucker entspricht, der Verbraucher also die vom Zucker her gewohnte Menge einsetzen kann.

### Beispiel 5

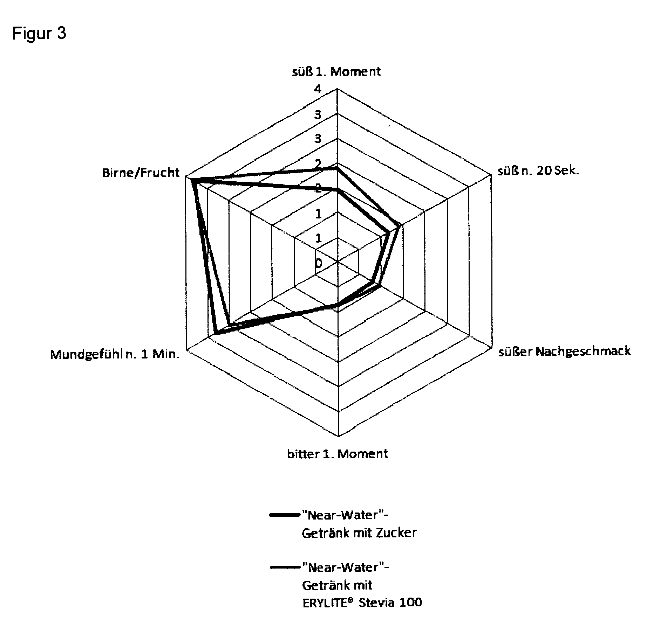

Die in Beispiel 3 hergestellten Partikel wurden im Vergleich mit Zucker in einem Nearwater-Getränk mit Birnenaroma verkostet. Die Ergebnisse sind in Figur 3 dargestellt. Auch in diesem Vergleich ergeben sich kaum Abweichungen zwischen Zucker (schwarze Linie) und dem erfindugnsgemäßen Süßungsmittel (graue Linie).

### Beispiel 6

Die Löslichkeit einer trockenen Mischung von Erythritol und Steviaextrakt im Süßkraftverhältnis 50:50 wurde mit einer erfindungsgemäß im Wirbelschichtverfahren hergestellten Mischung mit demselben Süßkraftverhältnis verglichen. Jeweils 50 g der Gemische wurden bei Raumtemperatur in 950 ml Wasser gelöst. Das erfindungsgemäß hergestellte Süßungsmittel löste sich etwa doppelt so schnell auf, wie die trockene Mischung.

## Patentansprüche

1. Verfahren zur Herstellung eines Süßungsmittels aus Erythritol und Steviaextrakt, **dadurch gekennzeichnet, dass** Erythritolpartikel mit einer Größe im Bereich von 250 bis 1400 µm mit einer Lösung von Steviaextrakt beschichtet werden, wobei das Süßungsmittel Erythritol und Steviaextrakt im Gewichtsverhältnis Erythritol:Steviaextrakt von 100:0,025 bis 100:0,16 enthält.

2. Verfahren zur Herstellung eines Süßungsmittels gemäß Anspruch 1, **dadurch gekennzeichnet, dass** die Erythritolpartikel im Luftstrom verwirbelt und mit der wässrigen Lösung von Steviaextrakt besprüht werden.

3. Verfahren gemäß Anspruch 1 oder 2, **dadurch gekennzeichnet, dass** Erythritol und Steviaextrakt im Gewichtsverhältnis von etwa 100:0,034 oder von etwa 100:0,154 verwendet werden.

4. Süßungsmittel enthaltend Erythritol und Steviaextrakt, erhältlich nach einem Verfahren gemäß Anspruch 1, 2 oder 3.

5. Süßungsmittel gemäß Anspruch 4, **dadurch gekennzeichnet, dass** das Süßkraftverhältnis Erythritol : Steviaextrakt im Bereich von 49:51 bis 86:14, vorzugsweise im Bereich von 50:50 bis 85:15 liegt.

6. Süßungsmittel gemäß Anspruch 4 oder 5, **dadurch gekennzeichnet, dass** das Steviaextrakt Rebaudiosid A oder ein Gemisch aus mindestens 97 Gew.-%, vorzugsweise mindestens 99 Gew.-% Rebaudiosid A, bezogen auf den Gesamtgehalt Stevioside, mit anderen Steviosiden ist.

7. Süßungsmittel gemäß mindestens einem der Ansprüche 4 bis 6, **dadurch gekennzeichnet, dass** es keine weiteren Substanzen außer Erythritol und Steviaextrakt enthält.

8. Süßungsmittel gemäß mindestens einem der Ansprüche 4 bis 6, **dadurch gekennzeichnet, dass** es ein oder mehrere natürliche oder synthetische oder natürliche und synthetische Aromen enthält.

9. Süßungsmittel gemäß mindestens einem der Ansprüche 4 bis 8, **dadurch gekennzeichnet, dass** es ein Pulver, Granulat, Formkörper, oder Tab ist.

10. Süßungsmittel gemäß mindestens einem der Ansprüche 4 bis 8, **dadurch gekennzeichnet, dass** eine wässrige Lösung ist.

11. Verwendung eines Süßungsmittels gemäß mindestens einem der Ansprüche 4 bis 10 zum vollständigen oder teilweisen Ersatz von Zucker in Lebensmitteln.

12. Verwendung gemäß Anspruch 11, **dadurch gekennzeichnet, dass** das Lebensmittel ein Getränk, eine Backware, eine Süßware, ein Eis, ein Dessert, eine Marmelade, eine Fruchtzubereitung, ein Dressing, eine Sauce oder eine Frühstückscerealie ist.
